# EUROPEAN PATENT SPECIFICATION

(11) **EP 2 997 700 B1**
(45) Date of publication and mention of the grant of the patent: **15.03.2017**
(21) Application number: 13780197.3
(22) Date of filing: 10.08.2013
(51) Int. Cl.: H04L 12/725, H04L 12/26, H04L 12/703, H04L 12/707, H04L 12/751, H04L 12/717

(54) **METHOD FOR ASSURED NETWORK STATE CONFIGURATION AND ROLLBACK IN LINK-STATE PACKET NETWORKS**
VERFAHREN FÜR SICHERE NETZWERKSTATUSKONFIGURATION UND ROLLBACK IN LINK-STATE-PAKETNETZWERKEN
PROCEDE POUR CONFIGURATION D'ETAT DE RESEAU ASSUREE ET RETOUR EN ARRIERE DANS DES RESEAUX A PAQUET D'ETAT DE LIAISON

(30) Priority: 13.05.2013 US 201361822696 P
(43) Date of publication of application: 23.03.2016
(73) Proprietor: Telefonaktiebolaget LM Ericsson (publ), 164 83 Stockholm (SE)
(72) Inventor: CSÁSZÁR, András, 2089 Telki (HU); FARKAS, János, 6000 Kecskemét (HU); KERN, András, 1118 Budapest (HU)
(74) Representative: Ericsson
(86) International application number: PCT/IB2013/056540
(87) International publication number: WO 2014/184625

(56) References cited:
- SRISURESH KUOKOA NETWORKS P JOSEPH FORCE10 NETWORKS P: "TE LSAs to extend OSPF for Traffic Engineering; draft-srisuresh-ospf-te-03.txt", 20020916, no. 3, 16 September 2002 (2002-09-16), XP015035657, ISSN: 0000-0004
- MOY ASCEND COMMUNICATIONS J ET AL: "OSPF Version 2; rfc2328.txt", 19980401, 1 April 1998 (1998-04-01), XP015008112, ISSN: 0000-0003
- GREDLER H ET AL: "Advertising MPLS labels in OSPF; draft-gredler-ospf-label-advertisement-00. txt", ADVERTISING MPLS LABELS IN OSPF; DRAFT-GREDLER-OSPF-LABEL-ADVERTISEMENT-00. TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 13 April 2013 (2013-04-13), pages 1-15, XP015091521, [retrieved on 2013-04-13]
- GREDLER H ET AL: "Advertising MPLS labels in IS-IS; draft-gredler-isis-label-advertisement-00. txt", ADVERTISING MPLS LABELS IN IS-IS; DRAFT-GREDLER-ISIS-LABEL-ADVERTISEMENT-00. TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 6 April 2013 (2013-04-06), pages 1-13, XP015091619, [retrieved on 2013-04-06]
- PREVIDI S ET AL: "Segment Routing with IS-IS Routing Protocol; draft-previdi-filsfils-isis-segment-routin g-01.txt", SEGMENT ROUTING WITH IS-IS ROUTING PROTOCOL; DRAFT-PREVIDI-FILSFILS-ISIS-SEGMENT-ROUTIN G-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 21 March 2013 (2013-03-21), pages 1-27, XP015091837, [retrieved on 2013-03-21]

## Description

This application claims the benefit of U.S. Provisional Application No. 61/822,696, filed May 13, 2013.

### FIELD

The present invention relates generally to link state protocols for packet-switched communication networks and, more particularly, to link state protocol extensions to enable network nodes to configure explicit paths and to determine whether the explicit path configuration is successful.

### BACKGROUND

Link-state control protocols, such as the Intermediate System to Intermediate System (IS-IS) or the Open Shortest Path First (OSPF), are distributed protocols that are most often used for the control of data packet routing and forwarding within a network domain. Each network node in the link state domain collects information on its adjacent neighbors by exchanging "Hello" messages with its neighbors. The network nodes in the link state domain then distribute the information on their neighbors by means of flooding link state messages. Each network node in the link state domain maintains a topology database that provides a "map" of the network. Using the network "map", each network node determines the path to each possible destination on its own, which is typically the shortest path computed by the Dijkstra algorithm often referred to as Shortest Path First (SPF). Each network node then sets a local forwarding entry to the port through which a given destination is reachable according to the result of the path computation. This mechanism ensures that there will be a shortest path between any node pairs.

The Institute of Electrical and Electronics Engineers (IEEE) standard 802.1 aq specifies extensions to IS-IS for the control of bridged Ethernet networks to implement Shortest Path Bridging (SPB). SPB is a form of add-on to IS-IS by means of new Type Length Values (TLVs) and the relevant operation described in IEEE 802.1aq. The existing IS-IS features have been maintained in IEEE 802.1aq, and new features have been added for the control for Ethernet. SPB uses shortest paths for forwarding and is also able to leverage multiple shortest paths. However, in certain cases it is desired to deviate from a default shortest path and to explicitly define the route of a path.

The IEEE draft specification Media Access Control (MAC) Bridges and Virtual Bridged Local Area Networks-Amendment: Path Control and Reservation, P802.1 Qca/D0.0 describes explicit paths as a sequence of hops, where each hop defines the next node over which the path must be routed through and disseminates this Explicit Path Descriptor (EPD) making use of IS-IS. All network nodes, upon receiving this advertisement are able to install the necessary forwarding entries to form an end-to-end explicit path.

It is theoretically also possible that additional protocols dedicated to signal explicit paths are also added to the Ethernet systems. The Resource reSerVation Protocol (RSVP) with Traffic Engineering (TE) extensions (RSVP-TE) can be used along with a link state protocol for the establishment of an explicit path and for reservation for Multiprotocol Label Switching (MPLS) or Generalized MPLS (GMPLS) networks. The RSVP-TE signaling protocol provides mechanism to signal explicit paths as well as allowing the path initiating or requesting node to determine when the configuration of the explicit path was completed.

IEEE 802.1Qca also considers a Path Computation Element (PCE), which also participates in the link state routing protocol domain. Thus, the PCE is also aware of the topology of the Ethernet network. According to this standard, the PCE can also specify explicit paths. Recent extensions to Path Computation Element Protocol (PCEP) allow the PCE to autonomously initiate the configuration of explicit paths of GMPLS networks. However, according to this protocol, the PCE communicates with the head-end of the path to be provisioned and this head-end will signal the path using RSVP-TE protocol.

A clear goal of the IEEE P802.1Qca Path Control and Reservation (PCR) project is to provide a solution for path control, which may also involve reservation features, which solution does NOT use any signaling protocol, especially not the IP/MPLS RSVP-TE protocol.

While IEEE 802.1Qca provides mechanism to signal an explicit path using a link state protocol, there is no feedback mechanism that enables the path requesting or path initiating network node to determine when the configuration of the explicit path is completed. In the context of the Ethernet networks, both RSVP-TE and PCEP have an outstanding disadvantage: they require the Internet Protocol (IP) protocol in the forwarding plane, which is not implemented by Ethernet networks. Furthermore, PCEP uses the Transport Control Protocol (TCP) that is also based on the IP. In order to use them, an auxiliary IP network, only for carrying the configuration messages, must be provisioned. This raises significant capital and operational expenditure issues.

However, being a dedicated protocol, a RSVP-TE protocol entity must be deployed at all network nodes and the RSVP-TE protocol entities must be appropriately configured. This increases not only the costs of the network devices but also adds administrative burden. PCEP notifies PCE about the success of path configurations, but it requires RSVP-TE to signal the Path Computation Client (PCC). In some scenarios, for example, when most traffic flows along shortest paths and only a few traffic flows are detoured to explicit paths, the deployment and management of these additional protocols adds an unacceptably high burden on the network operator.

Background art is disclosed by document "TE LSAs to extend OSPF for Traffic Engineering; draft-srisuresh-ospf-te-03.txt" by SRISURESH KUOKOA NETWORKS P JOSEPH FORCE10 NETWORKS P, 20020916, no. 3, 16 September 2002 (2002-09-16), XP015035657 and document "OSPF Version 2; rfc2328.txt" by MOY ASCEND COMMUNICATIONS J ET AL, 19980401, 1 April 1998 (1998-04-01), XP015008112.

### SUMMARY

The present disclosure enables a desired configuration of a switching network to be signaled by a requesting network node using the link state protocol and provides a mechanism that enables the requesting network node to determine whether the configuration is completed.
The requesting node may be any network node in the link state protocol domain, such as a PCE or a switching network node in the switching network. In some embodiments, the techniques can be used to configure an explicit path and to determine whether the configuration of the explicit path is successful.

A network node initiates a desired configuration by sending a link state message containing a configuration descriptor specifying the desired configuration and a predetermined type value. In some embodiments, the configuration descriptor may describe an explicit path for routing data traffic through a switching network. The configuration message is propagated through the network by flooding. Each network node receiving the configuration message is instructed to take appropriate action to implement the specified configuration and send a result report indicating a result of the configuration action. The result report may be included in a link state message and propagated by flooding so that all network nodes are able to determine whether the configuration was successfully completed.

In some embodiments, the explicit path may comprise strict hops or a combination of strict hops and loose hops. If the explicit path comprises only strict hops, it is enough to receive result reports from the network nodes involved in the explicit path. If the explicit path comprises loose hops, each network node should generate and send a result report network node. In this case, a network node involved in the explicit path sends a result report indicating the outcome (e.g., successful or failed) any configuration actions taken. A network node that is not involved in the explicit path may send a result report indicating that no action was taken (other than determining that it was not part of the explicit path). The requesting node may determine from the result report how the loose hops were resolved and which network nodes are involved in the explicit path.

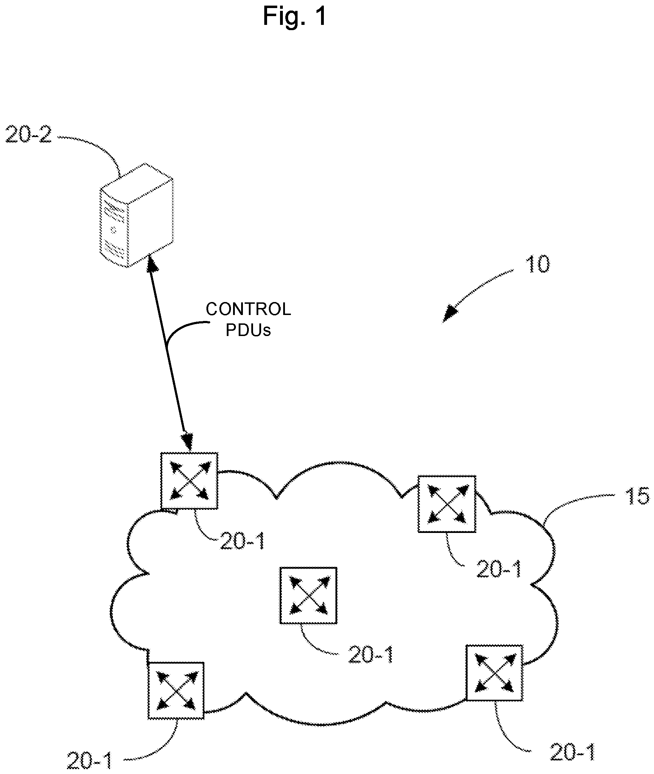

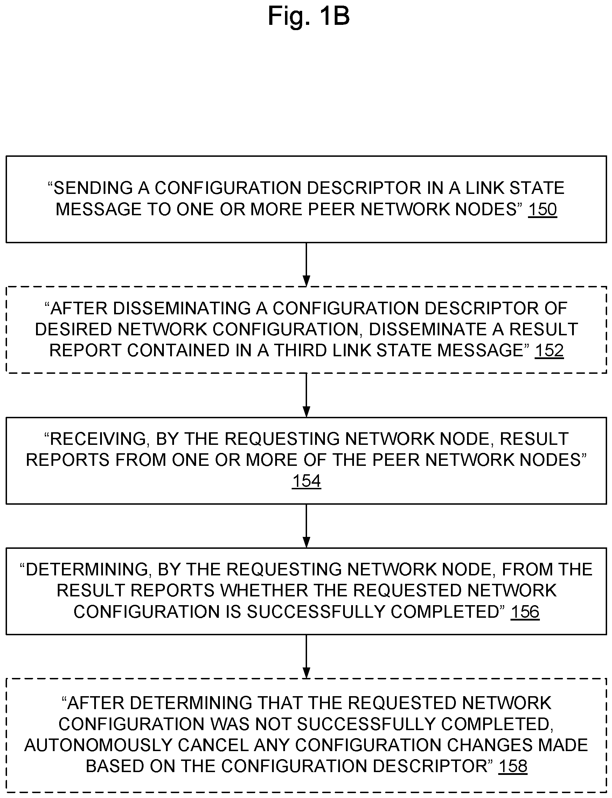

Exemplary embodiments of the disclosure, depicted in Fig. 1B, comprise a method implemented by a requesting network node in a communication network implementing a link state protocol for requesting a desired network configuration. In one embodiment, the method comprises sending 150 a configuration descriptor in a link state message to one or more peer network nodes in the link state domain of the requesting network nodes. The configuration descriptor describes a desired network configuration requested by the requesting network node. The method further comprises receiving 154, by the requesting network node, result reports from one or more of the peer network nodes. The result reports are received in second link state messages and indicate the results of configuration actions by the peer network nodes responsive to the configuration descriptor. The method further comprises determining 156, by the requesting network node, from the result reports whether the requested network configuration is successfully completed.

In some embodiments, the requesting network node, after determining that the requested network configuration was not successfully completed, autonomously cancels 158 any configurations changes made based on the configuration descriptor.

In some embodiments, the requesting network node, after disseminating a configuration descriptor of desired network configuration, disseminates 152 a result report contained in a second link state message.

In some embodiments of the disclosure, the requesting network node comprises a path computation entity.

In some embodiments of the disclosure, the requesting network node comprises a network controller for a switching network.

In other embodiments of the disclosure, the requesting network node comprises a switching node in a switching network.

In some embodiments of the disclosure, the configuration descriptor describes an explicit path in a switching network.

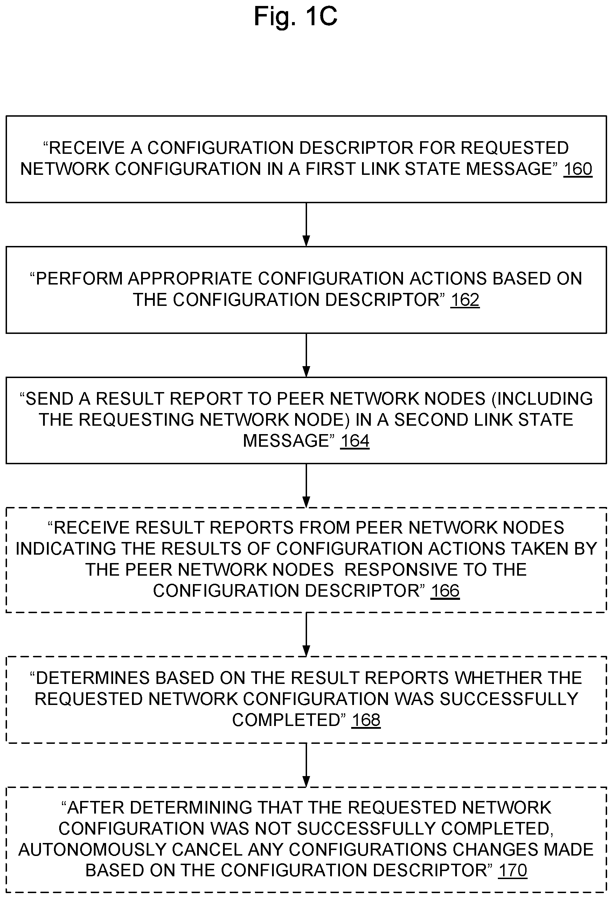

Other embodiments of the disclosure, depicted in Fig. 1C, comprise a method implemented by a receiving network node in a communication network implementing a link state protocol for installing a network configuration specified by a requesting network node in the same link state domain as the receiving network node. The receiving network node receives 160 a configuration descriptor for requested network configuration in a first link state message. The receiving network node performs 162 appropriate configuration actions based on the configuration descriptor and sends 164 a result report to its peer network nodes (including the requesting network node) in a second link state message. The result report indicates to the peer network nodes a result of the configuration action taken by the receiving network node.

In some examples, the receiving network node stores the configuration descriptor, or a reference to the configuration descriptor in memory. The receiving network node further receives 166 result reports from its peer network nodes indicating the results of configuration actions taken by the peer network nodes responsive to the configuration descriptor. The receiving network node correlates the received result reports with the configuration descriptor and determines 168 based on the correlated result reports whether the requested network configuration was successfully completed.

In some embodiments, the receiving network node, after determining that the requested network configuration was not successfully completed, autonomously cancels 170 any configurations changes made based on the configuration descriptor.

Other embodiments of the disclosure comprise a network node in a communication network. The network node comprises an interface circuit for communicating with peer network nodes over communication network, and a control circuit coupled with the interface circuit and configured to carry out the method according to any one of the method claims.

### BRIEF DESCRIPTION OF THE DRAWINGS

Fig. 1 illustrates an exemplary communication network.
Fig. 1B illustrates an exemplary method implemented by a requesting network node in a communication network implementing a link state protocol for requesting a desired network configuration.
Fig. 1C illustrates an exemplary a method implemented by a receiving network node in a communication network implementing a link state protocol for installing a network configuration specified by a requesting network node in the same link state domain as the receiving network node.
Fig. 2 illustrates an exemplary method implemented by a network node of processing result reports.
Fig. 3 illustrates an exemplary full path configuration result report sub-TLV.
Fig. 4 illustrates an implicit compact result report sub-TLV.
Fig. 5 illustrates an explicit compact result report sub-TLV.
Fig. 6 illustrates a method implemented by a network node of receiving an explicit path descriptor and generating an implicit compact result report.
Fig. 7 illustrates a method implemented by a network node of receiving implicit compact result reports.
Fig. 8 illustrates a method implemented by a network node of receiving an explicit path descriptor and generating an explicit compact result report.
Fig. 9 illustrates a method implemented by a network node of receiving explicit compact result reports.
Fig. 10 illustrates an exemplary network node.

### DESCRIPTION OF EMBODIMENTS

Referring now to the drawings, Fig. 1 illustrates an exemplary packet-switched communication network 10. The communication network 10 comprises a switching network 15 having a plurality of switching nodes 20-1, such as routers or switches, interconnected by communication links (not shown) for routing data traffic through the network 10 from a source to a destination. The communication network 10 may further include one or more external nodes 20-2, such as Path Computation Elements (PCEs) or network controllers for Software Defined Networks (SDNs). A PCE is an external node 20-2 that determines a suitable route for conveying data traffic between a source and a destination. A network controller for an SDN network is an external node 20-2 that manages flow control to enable intelligent networking. SDN controllers are based on protocols, such as OpenFlow, that allow the SDN controller to tell switching nodes 20-1 in the switching network where to send packets. The switching nodes 20-1 and external nodes 20-2 are referred to herein generically as network nodes 20. The communication network 10 may, for example, comprise an Internet Protocol (IP) network, Ethernet network, or other type of packet-switched network.

In exemplary embodiments of this disclosure, the communication network 10 uses a link state routing protocol, such as Open Shortest Path First (OPSF) or Intermediate System to Intermediate System (IS-IS), for calculating routes for forwarding of data packets or frames. To briefly summarize, each network node 20 in the link state protocol domain maintains a link state database (LSDB) describing the topology of the communication network 10. Link state protocols use a process known as flooding to synchronize the LSDBs maintained by each network node 20. Each network node 20 determines its local state, i.e. its usable ports and reachable neighbors, by exchanging "hello" messages with its immediate neighbors. When a network node 20 detects a change in the network topology or the state of a link, it generates and sends a link state advertisement to each of its neighbors. A network node 20 that receives a link state advertisement from a neighbor determines whether the link state advertisement contains a new or updated link state. If so, the receiving network node 20 updates its own LSDB and forwards the link state advertisement to its neighbors, except the one from which the link state advertisement message was received. The flooding process ensures that, within a reasonable time, all network nodes 20 will receive the link state advertisement and thus have the same LSDB.

The LSDB provides each network node 20 with the same "map" of the network topology. Each network node 20 involved in packet routing and forwarding, i.e. each switching node, independently determines how to route packets through the network 10 based on this network map. For each possible destination, the network node 20 computes the shortest path to the destination using, for example, the Dijkstra shortest path algorithm. The network node 20 then generates a forwarding rule for each possible destination according to the shortest path and saves the forwarding rule in a forwarding table. This mechanism ensures that packets will be routed over the shortest path.

### Signaling Configuration Results

The present disclosure enables a desired configuration to be signaled by a requesting network node 20 using the link state protocol and provides a mechanism that enables the requesting network node 20 to determine when the configuration is completed. The requesting node may be any network node in the link state protocol domain, including an external node 20-2 (e.g., PCE) or a switching node 20-1 in the switching network.

A network node 20 initiates the desired configuration by sending a link state message containing a configuration descriptor specifying the desired configuration. In some embodiments, the configuration descriptor may comprise a network wide configuration descriptor that is sent to one or more network nodes 20. The link state message containing the configuration descriptor, referred to herein as a configuration message, is propagated through the network 10 by flooding and contains a type value indicating that the message is a configuration message. Each network node 20 receiving the configuration message is instructed to take appropriate action to implement the specified configuration and send a result report indicating a result of the configuration action. For example, the result report may indicate that the configuration action was successful, that the configuration action was unsuccessful, or that no action was required. The result report may be included in a link state message and propagated by flooding so that all network nodes 20 are able to determine whether the configuration was successfully completed. A link state message including a result report is referred to herein as a result report message.

As one example, the present disclosure enables an explicit path (EP) to be signaled by the requesting network node 20 (e.g., PCE) using the link state protocol and enables the requesting network node 20 to determine when the configuration of the explicit path is completed. The explicit path may contain strict hops and loose hops. A network node 20 initiates the configuration of an explicit path by sending a configuration message containing an Explicit Path Descriptor (EPD) to its neighbors. The EPD is a network wide configuration descriptor sent to two or more network nodes 20 describing an explicit path to be configured. The EPD is propagated by flooding to each of the network nodes 20 in the switching network. The draft specification Media Access Control (MAC) Bridges and Virtual Bridged Local Area Networks-Amendment: Path Control and Reservation, P802.1 Qca/D0.0, undated (IEEE 802.1Qca) describes techniques for generating and distributing a configuration message in a Shortest Path Bridge (SPB) network using the IS-IS protocol. Relevant portions of IEEE 802.1Qca are attached hereto as Appendix A and incorporated herein by reference. Each network node 20 receiving the configuration message with the EPD takes appropriate action to configure the explicit path and sends a result report indicating a result of the configuration action. For example, the result report may indicate that the explicit path configuration was successful, that the explicit path configuration was unsuccessful, or that no action was required. The result report may be included in a link state message and propagated by flooding so that all network nodes 20 are able to determine whether the configuration changes were successfully completed.

For IS-IS, the link state messages containing a configuration descriptor or result report comprise link state (LS) packet data units (PDUs) (LSPs). In OSPF, the link state messages may comprise a link state requests, link state updates, or link state acknowledgements.

### Format of the Result Report

The result report message comprises an appropriate identifier of the network wide configuration descriptor and expresses the result of the configuration actions conducted by the network node 20. Depending on the implementation, the result report message may include:
1. The full content of the network wide configuration descriptor;
2. A compact representation of the network wide configuration descriptor, such as an MD5 hash of the network wide configuration descriptor;
3. The identifiers of the link state message which carried the network wide configuration descriptor.

The second realization applies a method similar to how the digest of a link descriptor is generated in Shortest Path Bridging (SPB) (IEEE 802.1aq, clause 28.4.6). In the case of complex systems, a plurality of databases are synchronized using a link state protocol. Then an adequate identifier of the database, in which the network wide configuration is included, can provide additional information about the encoded descriptor. An adequate database identifier can be generated in a manner similar to how the topology digest is generated in SPB (IEEE 802.1aq, clause 28.4.6).

In the third realization, the scope of the result report is the whole content of the link state message. This means that if several configuration descriptors are included in a single link state message, the result is applied to all of them. The network node 20 that initiates an explicit path configuration is allowed to insert one configuration descriptor per link state message.

### Implicit and Explicit Result Encoding

A network node 20 may express the result of a configuration action in two ways: implicitly (implicit result encoding) or explicitly (explicit result encoding). With implicit result encoding, the advertisement of the result report implies that the network node 20 sending the result report did not fail the configuration action, i.e., it was successful or did not need to take any action. The failure to advertise a result report by a network node 20 is interpreted to mean that the configuration action failed. With explicit result encoding, an explicit result code is included in the result report and/or the result is explicitly encoded in an attached data structure.

### Implementation Options For Result Report

In exemplary embodiments of this disclosure, the result report may be added as a new information element into existing link state messages as described below. Alternatively, new link state message may be defined for the result report. In either case, the link state messages are propagated (flooded) as usual, i.e., no new mechanism is required.

### Ethernet: ISIS-SPB Implementation

The result report information elements can be carried within a Multi-Topology Capability (MT-Capability) Type Length Value (TLV), which is a top level TLV for Link State Packet Data Units (LSPs) that provides Multi-Topology context. It identifies the Multi-Topology Identifier for sub-TLVs in LSPs. Note that ISIS-SPB is an add-on to IS-IS, therefore, the TLVs used for IS-IS to carry the digest can be also used for ISIS-SPB.

### IP: IS-IS Implementation

The network state digest should be created in a new (sub) Type Length Value (TLV) advertised by routers. The TLV, along many others describing links and other properties, may be included in an LSP.

### IP: OSPF Implementation

The network state digest could be put in a new Type-Length-Value (TLV) advertised in a Router Link State Advertisement (LSA).

### Opaque LSA Option Implementation

Both OSPF and ISIS have been extended with the concept of opaque data structures, where the content of these data structures are not relevant to the basic link state protocol, but additional entities can read and process them. Thus, another option would be to create a new Opaque LSA type where to insert this TLV.

### Basic Node Procedures Implicit Result Encoding Option

A network node 20 receiving a configuration descriptor disseminates a result report in the following cases: (1) when it executed all actions prescribed by the configuration instructions; or (2) no actions were needed to be executed. All network nodes 20, including the one initiating the configuration descriptor, receive the result report. Upon receiving a result report, a network node 20 determines that no error occurred during configuration at the reporting network node 20. After observing result reports from all other network nodes 20 of the domain, a network node 20 determines that the configuration specified by the configuration descriptor to be completed.

The network node 20 initiating the configuration descriptor is not able to detect whether other network nodes 20 failed to configure themselves according to configuration descriptor. To determine whether other network nodes 20 failed in executing the configuration, the initiating network node 20 starts a timer for each stored configuration descriptor. The network node 20 configures this timer when the configuration descriptor is stored in the local database by setting the timer. This value can be predefined or dynamically calculated based on measurements of link state protocol message related delays.

Once the timer started the following events in relation to the timer can occur:
- The network node 20 receives a result report. In this case, the network node 20 may restart the timer.
- The network node 20 collects result reports from all nodes. In this case, the network node 20 stops the timer and considers the configuration completed.
- The timer, assigned to a configuration instruction descriptor, expires. In this case, the network node 20 considers the configuration failed.

### Basic Node Procedures Explicit Result Encoding Option

According to one embodiment, a network node 20 that receives a configuration descriptor to be applied by the network node 20 disseminates an explicit result report when it has executed all actions prescribed by the configuration instructions. The result report includes an adequate identifier of the configuration descriptor and the result of the configuration. In addition to advertising the result report, the network node 20 stores a copy of the result report in its local database as well. The result can be one of the following:
- "NO ACTIONS TAKEN": The network node 20 does not need to execute any configuration actions.
- "SUCCESSFUL": The network node 20 successfully performed all necessary configuration action.
- "FAILED": The network node 20 was not able to perform all requested necessary configuration actions and rolled back the executed ones.

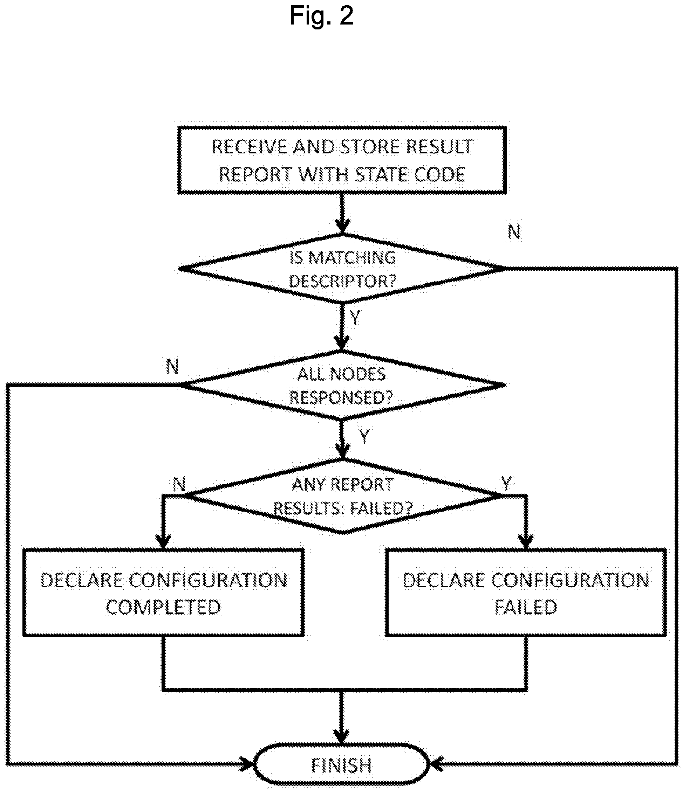

Each network node 20 that receives an explicit result report, executes the procedure shown in Figure 2. First, the network node 20 saves the identifier of the network node 20 that advertised the result report, and the content of the result report. Then, the network node 20 looks for a matching configuration descriptor among the already received ones, to which the result report refers. If the network node 20 does not find a matching configuration descriptor, the network node 20 assumes that this configuration descriptor will arrive later, so it only needs to store the result report in a local store. As the result report has been already stored in the first step, the network node 20 finishes the process. Note, that when the network node 20 receives a configuration descriptor, it looks for matching result reports in the local store and applies the below rules to the matching reports. For example, assume that the network node 20 has already received a result report with the result code set to "FAILED". Because the network node 20 already stored the result report, it immediately applies the result report when the configuration descriptor arrives. This means that without further processing, the descriptor will be considered and stored as failed.

After finding the matching descriptor, the network node 20 checks if all network nodes 20 of the domain responded with a result report referring to the matching descriptor. When responses from all network nodes 20 have been collected and the local configuration procedure has been finished, the network node 20 determines whether any of the received result reports referring to the configuration descriptor has the result code set to "FAILED." If so, the network node 20 declares the whole configuration failed. On the other hand if all result codes are either "NO ACTIONS TAKEN" or "SUCCESSFUL", i.e., no nodes has responded with the FAILED result code, the network node considers the configuration described in the configuration instruction descriptor completed.

### Distributed autonomous rollback

As discussed above, each network node 20 that collects and processes the result reports is able to detect whether a configuration was successfully carried out at other network nodes 20, or whether the configuration failed at one or more network nodes 20. Because the result reports are disseminated using link state messages, all network nodes 20 should be aware of the status of the overall configuration. Therefore, it is possible to implement a distributed rollback mechanism based on the distributed detection of a network configuration failure. The triggers and procedures depend on how the result is encoded.

In the implicit result report case, the expiration of a timer associated with the configuration descriptor indicates the failure of implementing the configuration descriptor. After this step, the network node 20 rolls back all local configurations dictated by the failed configuration descriptor and removes the configuration descriptor from its local database.

In the explicit result report case, after collecting the responses of all network nodes 20 of the communication network 10, the network node 20 declares the configuration failed if any of the network nodes 20 reported a "failure" to implement the configuration. After declaring a configuration failure, the node rolls back all local configurations dictated by the failed configuration descriptor and removes the configuration instruction descriptor from its local database.

### Withdrawing configuration

The network node 20 that initiated the network wide configuration specified by a configuration descriptor may want to withdraw the configuration. In case of explicit result encoding, the configuration initiating network node 20 withdraws a network wide configuration by sending a second explicit result report message with result code set to "failed". Any network nodes 20 receiving this result report declares the matching configuration descriptor failed and roll back.

### Implementing Reliable Explicit Path Configuration

The initial draft version of the IEEE 802.1Qca describes a method for an Ethernet network in which a path initiating network node 20 constructs an EPD that lists all network nodes 20 along which the explicit path must be routed. The path initiating node may comprise a switching node 20-1 or an external node 20-2 (e.g., PCE). The path initiating network node 20 then disseminates this EPD in a link state message using IS¬IS as a link state routing protocol. In IS-IS, the link state message is referred to as a link state (LS) packet data unit (PDU) (LSP). However, IEEE 802.1Qca does not provide any mechanism for the path initiating network node 20 to discover whether the configuration of the explicit path was successful. Applying the result reporting techniques described above, the path initiating network node 20 will be able to detect whether other network nodes 20 along the path were able to configure the explicit path according to the EPD.

### Explicit Path Report Message Examples

In one embodiment, the EPD is implemented as a configuration descriptor. The format and the details of the result reports depend on the particular embodiment/implementation.

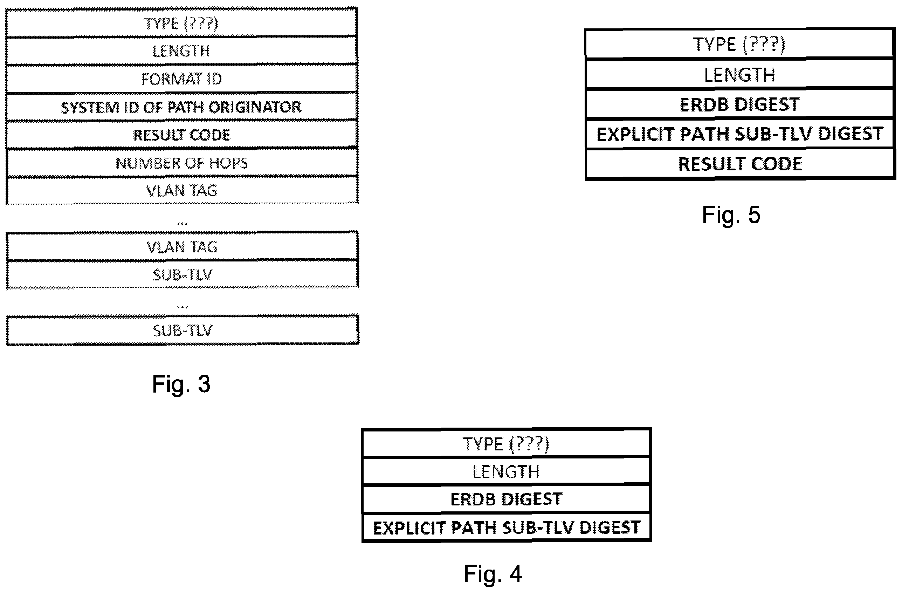

In one possible implementation of the result report for path configuration, referred to as a full result advertisement, comprises an updated version of the EPD. In this approach, the EPD is extended to include a network node originator field and a status field. An example of the result report used to implement full result advertisement is depicted on Figure 3.

Another possible implementation of the result report for path configuration, referred to herein as an implicit compact result report, comprises a newly defined sub-TLV that is included in and advertised as part of a link state message (e.g., LSP for IS¬IS). The format of that sub-TLV is shown on Figure 4. After the type and length fields, it encodes two digests. The first digest encodes the Explicit Path Database (EPDB) stored by the network node 20 sending the result report, and the second digest encodes the EPD to which the report refers. The result code field indicates the result of any configuration actions.

One possible implementation of the result report for path configuration, referred to herein as an explicit compact result report, comprises a newly defined sub-TLV that is included in and advertised as part of a LSP. The format of that sub-TLV is shown on Figure 5. After the type and length fields, it encodes two digests and a result code field. The first digest encodes the Explicit Path Database (EPDB) stored by the network node 20 sending the result report, and the second digest encodes the EPD to which the report refers. The result code field indicates the result of any configuration actions.

### Network Node Procedure Optimization

In any of the embodiments described above, all network nodes 20 that receive the configuration descriptor, will respond with a result report. Also, the network nodes 20 collect the result reports from all other network nodes 20 before declaring the configuration completed or failed.

In case of explicit path configuration, typically only a few network nodes 20 of the link state protocol domain are addressed by the explicit path configuration, while other network nodes 20 will not participate in the configuration of the path. When the EPD comprises of only strict hops, only the network nodes 20 specified by a strict hop need to execute the configuration instruction. This allows the optimization of the result report generation: only the network nodes 20 listed by the EPD will respond. This optimization requires some updates to the network node 20 procedures, which updates will be discussed in the following sections.

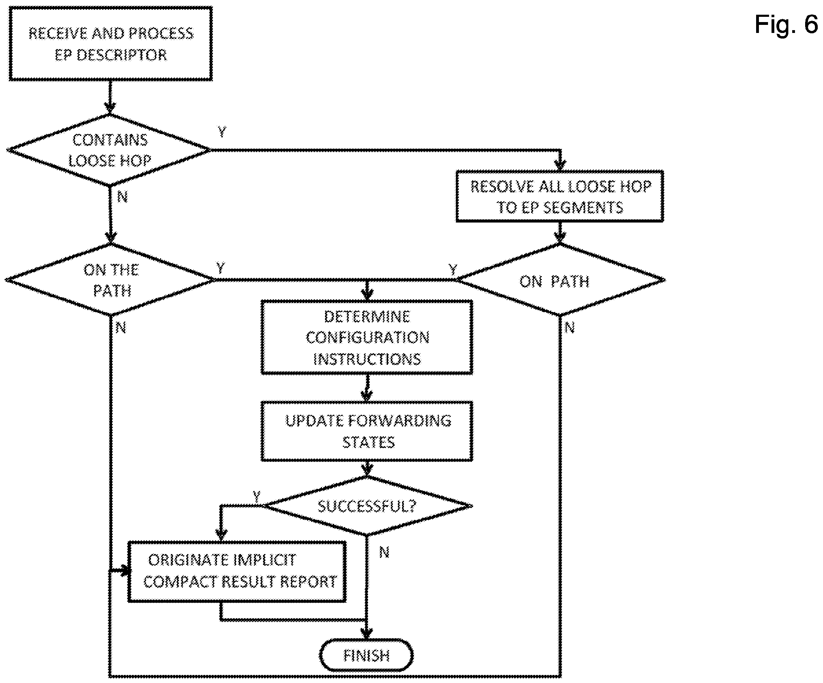

In case of implicit compact result reporting, the network node 20 that receives an EPD, executes the procedure shown in Figure 6. After receiving the EPD, network node 20 checks whether there are loose hops in the explicit path. If the explicit path is formed of only strict hops, the network node 20 checks if it is involved in the path as a strict hop. If yes, the network node 20 starts configuring itself according to EPD; otherwise it disseminates an implicit compact result report and finishes processing the EPD.

If the explicit path contains at least one loose hop, then the network node 20 resolves all loose hops, determines path segments implementing the loose hops, and checks if it is along the path including the resolved path segment. If yes, the network node 20 starts configuring itself according to the EPD; otherwise, the network node 20 disseminates an implicit compact result report and finishes processing the EPD.

As part of the configuration, the network node 20 determines the configuration instructions and executes them. If all configuration instructions were successfully executed, e.g., the forwarding information base (FIB)/filtering database (FDB) and the port configuration actions were successfully completed, the network node 20 disseminates an implicit compact result report message. If any failure occurs during the configuration, the network node 20 rolls back the local configuration and finishes the processing without generating a result report message.

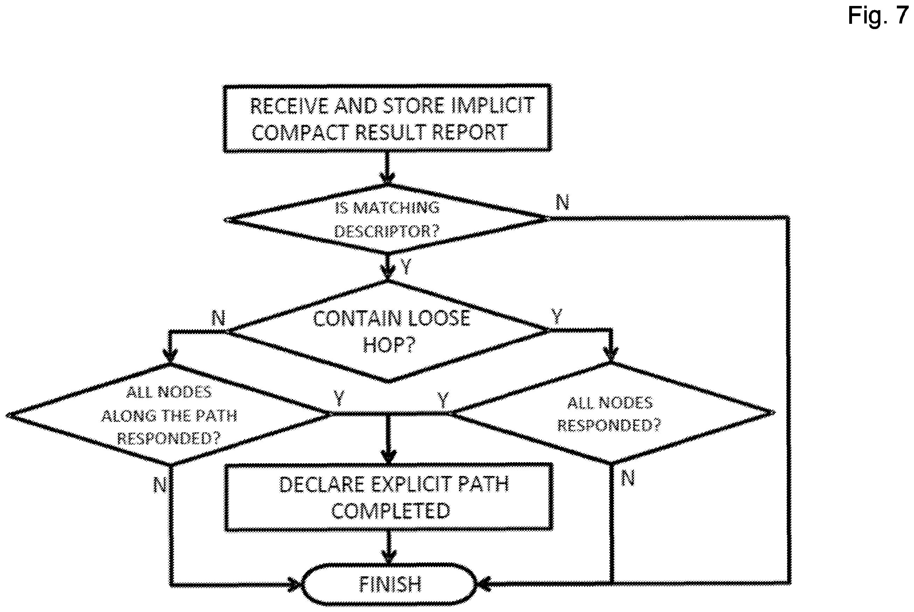

Each network node 20 in the link state protocol domain receives the implicit compact result report messages. The network nodes 20 execute the procedure shown in Figure 7 upon receipt of an implicit compact result report. First, it stores the received report and looks for a matching EP Descriptor. Then it checks if the original EP Descriptor contains loose hop. If so, then it has to be determined from which network nodes 20 to expect report messages. If the EP is only comprised of strict hops, only the network nodes 20 of those hops are expected to respond; otherwise all network nodes 20 must reply report. Then the network node 20 checks if the strict hop network nodes 20 or all network nodes 20 have already responded with result report. If yes, the network node 20 declares the path configuration completed.

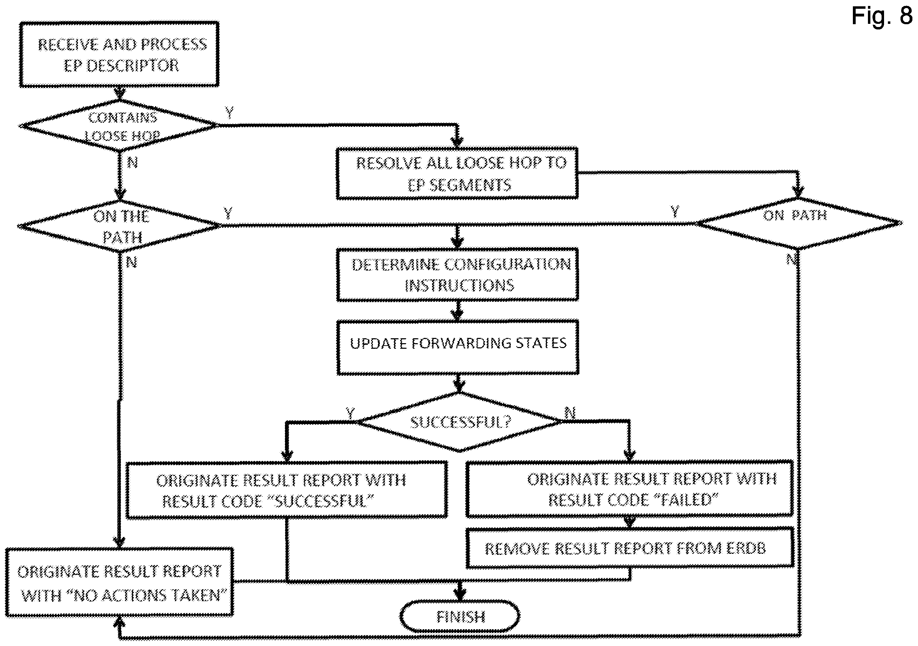

In the cases of explicit compact result reporting and full result advertisement realizations, the network node 20 that receives an EPD performs the procedure shown in Figure 8. After receiving the EPD, the network node 20 checks whether there are loose hops in the path. If the path is formed of only strict hops, the network node 20 checks if it is listed as a strict hop. If yes, the network node 20 starts configuring itself according to EPD; otherwise it generates explicit result report message (e.g. full path result report or explicit compact result report) with the result code set to "NO ACTIONS TAKEN".

If the path contains at least one loose hop, the network node 20 resolves all loose hops, determines path segments implementing the loose hops, and checks if it is along the path including the resolved path segments. If yes, the network node 20 starts configuring itself according to EPD; otherwise it generates an explicit result report with result code set to "NO ACTIONS TAKEN".

As part of the configuration, the network node 20 determines the configuration instructions and executes them. If all configuration instructions are successfully executed, e.g., the FIB/FDB and the port configuration actions were done successfully, the network node 20 disseminates an explicit result report message with the result code set to "SUCCESSFUL". If a failure occurs during the path configuration, the network node 20 rolls back the local configuration and generates an explicit result report message with result code set to "FAILED".

After generating the EP report message the network node 20 finishes the procedure.

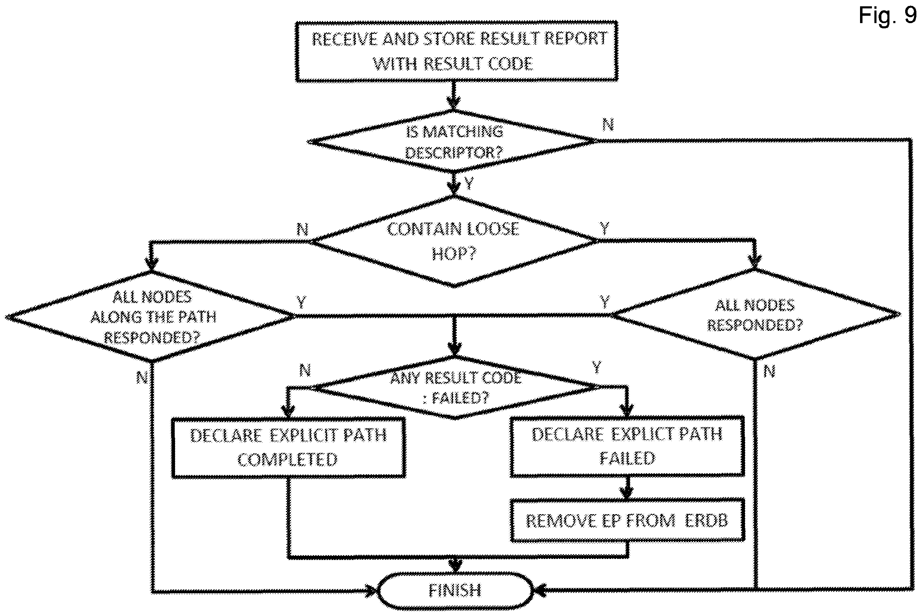

Each network node 20 in the link state protocol domain receives the explicit result report messages. When a network node 20 receives an explicit result report, it performs the procedure shown in Figure 9. First, the network node 20 stores the received report and looks for a matching EPD. Then, the network node 20 checks whether the original EPD contains a loose hop in order to determine from which network nodes 20 it expects result report messages. If the explicit path is comprised only of strict hops, only the network nodes 20 along those hops are expected to respond; otherwise all network nodes 20 must respond. The network node 20 then checks whether the strict hop network nodes 20, or all network nodes 20, have already responded with a result report. If yes, the network node 20 checks if result code of any of the result reports was set to "FAILED". If yes, the network node 20 declares that the path installation has failed, rolls back the local configuration (if needed), and removes the EPD from the EPDB. The network node 20 then finishes the procedure.

The explicit result report message may be implemented by an explicit compact result report sub-TLV (see Figure 5) in case of explicit compact result reporting, or by a full path result report sub-TLV (Figure 3) for a full path advertisement.

### Discovering the Instantiated Explicit Path

The path initiating network node 20, which may comprise a control node (e.g. PCE), is allowed to loosely specify the explicit path, i.e., it does not determine all hops along the path and lets the intermediate network nodes 20 fill-in the unspecified segments of the path. Since the intermediate network nodes 20 run a Shortest Path First (SPF) or Constrained Shortest Path First (CSPF) algorithm locally to determine the exact route for the loose hops in the EPD, path segments implementing the loose hops are calculated in a distributed fashion. Therefore, the explicit path requesting network node 20 may not be aware of loose hop path segments.

One embodiment of the disclosure provides a method for the path requesting network node 20 to determine the exact path has been configured in the network even if the path is not fully specified.

In the case of explicit result reporting (i.e. explicit compact result reporting or full state advertisement) where loose hops are part of the EPD, a network node 20, which is successfully configured after receiving the EP descriptor, generates an EP result report with result code "successful" even if the reporting network node 20 is not listed in the EPD. It becomes clear that these reporting network nodes 20 are along the explicit path because of the report generating procedures. Then the path requesting network node 20, based on this information, is able reconstruct the exact path, i.e. becomes aware of the path finally installed.

In case of implicit result reporting, only the network nodes 20 that failed to install the requested configuration, do not reply with a result report. A first network node 20 cannot distinguish the case where a second network node 20 has successfully configured the path from the case where the second network node 20 does not need to conduct any configuration action. This way, the first network node 20 is not able to detect the network nodes 20 along the explicit path in case of loose hops. However, if the negative acknowledgement is less important, with the following updates it becomes possible to implement explicit path discovery:
- A network node 20 emits Implicit EP Report message only if it successfully configured itself.
- Timer based negative acknowledgement mechanism is switched off.

As a consequence the network nodes 20, which provided implicit compact result report, have conducted local configuration as a consequence of an EPD. This means that these network nodes 20 are along the explicit path. By collecting these responses, a network node 20 becomes aware of the explicit path.

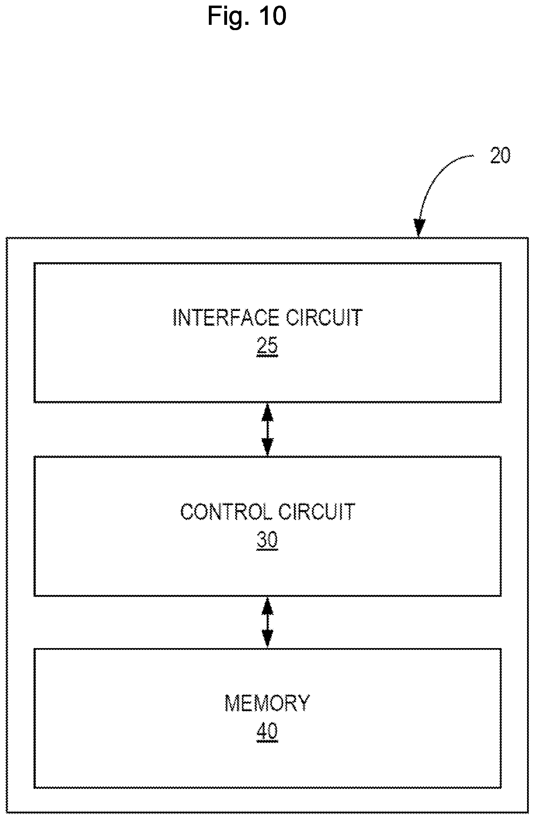

Figure 10 illustrates the main functional elements in a network node 20 according to one exemplary embodiment. The network node 20 comprises an interface circuit 25, a control circuit 30, and memory 40. The interface circuit 25 connects the network node 20 to a communication network 15. The interface circuit 25 may comprise, for example, an Ethernet interface or other IP-based interface. The control circuit 30 controls the operation of the network node 20 as previously described. The control circuit 30 may comprise one or more processors, microcontrollers, hardware circuits, firmware, or a combination thereof. The local memory 40 may comprise random access memory (RAM), read-only memory (ROM), Flash memory, or other type of memory. The local memory may also include internal memory such as register files, L1 cache, L2 cache or other memory array in a microprocessor. The local memory 40 stores computer program code and data used by the network node 20 to perform the operations as described herein. The data stored by the local memory 40 includes, for example, the LSDB, routing tables, EPDB, FIB, FDB, and other data used for configuring paths and for routing data traffic.

The present disclosure enables a network node 20 in a link state domain, including a PCE or other external node 20-2, to be aware of the result of a configuration instruction relevant for plurality of network nodes 20 making use of link state protocol messages. Additionally, the disclosure provides mechanism for a network node 20 to autonomously roll back the previously installed updates dictated by a configuration instruction relevant for plurality of network nodes 20 without involving other protocols.

The methods described in this disclosure can be applied during the explicit path configuration specified by IEEE 802.1Qca. This allows the network node 20 that request the explicit path to determine whether the configuration of the path was accomplished. Furthermore, in some embodiments the network node 20 or external entity becomes aware of the exact explicit path even if finally installed in the communication network 10 even if the explicit path involves loose hops. These advantages are provided without involving signaling protocols. The techniques described in this disclosure can be integrated into a link state control protocol, such as IS-IS or ISIS-SPB.

## Claims

1. A method in a requesting network node (20) in a communication network (10) implementing a link state protocol for determining whether a requested network configuration has been implemented, the method comprising:
sending (150), by the requesting network node (20), a configuration descriptor within a first link state message by flooding the first link state message to one or more peer network nodes (20-1) in the communication network (10), wherein the configuration descriptor describes the requested network configuration;
receiving (154), by the requesting network node (20), one or more result reports within one or more link state messages originated by the one or more peer network nodes (20-1) and flooded through the communication network (10), wherein each of the one or more result reports indicates a result of an attempt by the respective originating peer network node to perform a configuration action taken responsive to the configuration descriptor; and
determining (156), by the requesting network node (20), whether the requested network configuration has been implemented based upon the one or more result reports.

2. The method of claim 1, further comprising:
responsive to determining that the requested network configuration has not been implemented, cancelling (158) configuration changes made based on the configuration descriptor; and wherein said cancelling optionally comprises sending a result report message to the one or more peer network nodes (20-1), wherein the result report message comprises a result code indicating a failure.

3. The method of any one of claims 1 to 2, further comprising:
after the sending of the configuration descriptor within the first link state message, sending (152) a result report within a second link state message by flooding the second link state message to the one or more peer network nodes (20-1) through the communication network (10).

4. The method of any one of claims 1 to 3, wherein the requesting network node (20) comprises a Path Computation Entity; and/or
wherein the communication network (10) comprises a switching network (15);
and
the requesting network node (20) comprises a network controller of the switching network (15).

5. The method of any one of claims 1 to 4, wherein:
the communication network (10) comprises a switching network (15); and
the requesting network node (20) and the one or more peer network nodes (20-1) are switching nodes of the switching network (15).

6. The method of any one of claims 1 to 5, wherein the configuration descriptor identifies an explicit path that comprises one or more strict hops specifying an exact path for the explicit path; and/or
wherein the configuration descriptor identifies an explicit path that comprises at least one loose hop and thus does not specify any exact path for the explicit path.

7. The method of claim 1, wherein the configuration descriptor identifies an explicit path that comprises at least one loose hop and thus does not specify any exact path for the explicit path, wherein the method further comprises:
determining, by the requesting network node (20), the exact path based upon the one or more result reports from the one or more peer network nodes (20-1).

8. The method of any one of claims 1 to 7, wherein each of the one or more result reports comprises one or more of:
the configuration descriptor;
a compact representation of the configuration descriptor; and
an identifier of the first link state message; and/or
wherein each of the one or more result reports of the one or more link state messages are included within a Multi-Topology Capability Type Length Value element of the respective link state message.

9. A method implemented by a receiving network node (20-1) in a communication network (10) implementing a link state protocol for implementing a requested network configuration specified by a requesting network node (20), the method comprising:
receiving (160) a configuration descriptor that describes the requested network configuration within a first link state message originated by the requesting network node (20) and flooded through the communication network (10);
attempting (162) to perform a configuration action based on the configuration descriptor; and
sending (164) a result report in a second link state message by flooding the second link state message to one or more peer network nodes of the communication network (10) and the requesting network node (20), wherein the result report indicates a result of the attempt to perform the configuration action.

10. The method of claim 9, further comprising:
receiving (166) one or more result reports originated by the one or more peer network nodes, wherein each of the one or more result reports indicates a result of an attempt by the respective originating peer network node to perform a configuration action responsive to the configuration descriptor.

11. The method of claim 10, further comprising:
determining (168) whether the requested network configuration specified by
the requesting network node (20) was implemented based on the one
or more result reports; and
after determining that the requested network configuration was not implemented, optionally cancelling (170) configuration changes made based on the configuration descriptor.

12. The method of claim 9 or 10, wherein the result report indicates that the receiving network node (20-1) failed to perform the configuration action to implement the requested network configuration.

13. The method of any one of claims 9 to 11, wherein the result report indicates
that the receiving network node (20-1) successfully performed the configuration action to implement the requested network configuration.

14. The method of any one of claims 9 to 13, wherein the configuration descriptor identifies an explicit path in the communication network (10); and, optionally,
wherein the explicit path comprises one or more strict hops specifying an exact path for the explicit path; or
wherein the explicit path comprises at least one loose hop and thus does not specify any exact path for the explicit path.

15. The method of claim 9, wherein the configuration descriptor identifies an explicit path in the communications network (10) that comprises at least one loose hop and thus does not specify any exact path for the explicit path, and wherein the method further comprises:
determining, by the receiving network node (20-1), the exact path based upon the one or more result reports from the one or more peer network nodes (20-1).

16. The method of any one of claims 9 to 15, wherein the result report comprises one or more of:
the configuration descriptor;
a compact representation of the configuration descriptor; and
an identifier of the first link state message; and/or
wherein the result report is included within a Multi-Topology Capability Type Length Value element of the second link state message.

17. A network node (20) in a communication network (10), comprising:
an interface circuit (25) configured to communicate with one or more network nodes of the communication network (10), and
a control circuit (30) coupled with the interface circuit and configured to carry out all the steps of the method according to any one of claims 1 to 16.

## Patentansprüche

1. Verfahren in einem anfragenden Netzwerkknoten (20) in einem Kommunikationsnetzwerk (10), das ein Link-State-Protokoll zum Ermitteln, ob eine angefragte Netzwerkkonfiguration implementiert wurde, implementiert, das Verfahren umfassend:
Senden (150), durch den anfragenden Netzwerkknoten (20), eines Konfigurationsbeschreibers innerhalb einer ersten Link-State-Nachricht, durch Leiten der ersten Link-State-Nachricht an einen oder mehrere Peer-Netzwerkknoten (20-1) im Kommunikationsnetzwerk (10), wobei der Konfigurationsbeschreiber die angefragte Netzwerkkonfiguration beschreibt;
Empfangen (154), durch den anfragenden Netzwerkknoten (20), einer oder mehr Ergebnismeldungen innerhalb einer oder mehr Link-State-Nachrichten, die von dem einen oder den mehreren Peer-Netzwerkknoten (20-1) erstellt und durch das Kommunikationsnetzwerk (10) geleitet werden, wobei jede der einen oder mehreren Ergebnismeldungen ein Ergebnis eines Versuchs durch den jeweiligen erstellenden Peer-Netzwerkknoten anzeigt, eine Konfigurationshandlung als Reaktion auf den Konfigurationsbeschreiber auszuführen; und
Ermitteln (156), durch den anfragenden Netzwerkknoten (20), ob die angefragte Netzwerkkonfiguration basierend auf der einen oder den mehreren Ergebnismeldungen implementiert wurde.

2. Verfahren nach Anspruch 1, des Weiteren umfassend:
als Reaktion auf ein Ermitteln, dass die angefragte Netzwerkkonfiguration nicht implementiert wurde, Abbrechen (158) von Konfigurationsänderungen, die basierend auf dem Konfigurationsbeschreiber gemacht werden; und wobei das Abbrechen optional ein Senden einer Ergebnismeldungsnachricht an den einen oder die mehreren Netzwerkknoten (20-1) umfasst, wobei die Ergebnismeldungsnachricht einen Ergebniscode umfasst, der einen Fehler anzeigt.

3. Verfahren nach einem der Ansprüche 1 bis 2, des Weiteren umfassend:
nach dem Senden des Konfigurationsbeschreibers innerhalb der ersten Link-State-Nachricht, Senden (152) einer Ergebnismeldung innerhalb einer zweiten Link-State-Nachricht, durch Leiten der zweiten Link-State-Nachricht an den einen oder die mehreren Peer-Netzwerkknoten (20-1) durch das Kommunikationsnetzwerk (10).

4. Verfahren nach einem der Ansprüche 1 bis 3, wobei der anfragende Netzwerkknoten (20) eine Pfadberechnungsinstanz umfasst; und/oder
wobei das Kommunikationsnetzwerk (10) ein Vermittlungsnetzwerk (15) umfasst; und
der anfragende Netzwerkknoten (20) eine Netzwerksteuerung des Vermittlungsnetzwerks (15) umfasst.

5. Verfahren nach einem der Ansprüche 1 bis 4, wobei:
das Kommunikationsnetzwerk (10) ein Vermittlungsnetzwerk (15) umfasst; und
der anfragende Netzwerkknoten (20) und der eine oder die mehreren Peer-Netzwerkknoten (20-1) Vermittlungsknoten des Vermittlungsnetzwerks (15) sind.

6. Verfahren nach einem der Ansprüche 1 bis 5, wobei der Konfigurationsbeschreiber einen ausdrücklichen Pfad identifiziert, der einen oder mehrere strikte Hops umfasst, die einen exakten Pfad für den ausdrücklichen Pfad bestimmen; und/oder
wobei der Konfigurationsbeschreiber einen ausdrücklichen Pfad identifiziert, der zumindest einen lockeren Hop umfasst und damit keinen exakten Pfad für den ausdrücklichen Pfad bestimmt.

7. Verfahren nach Anspruch 1, wobei der Konfigurationsbeschreiber einen ausdrücklichen Pfad identifiziert, der zumindest einen lockeren Hop umfasst und somit keinen exakten Pfad für den ausdrücklichen Pfad bestimmt, wobei das Verfahren des Weiteren umfasst:
Ermitteln, durch den anfragenden Netzwerkknoten (20), des exakten Pfads basierend auf der einen oder dem mehreren Ergebnismeldungen von dem einen oder den mehreren Peer-Netzwerkknoten (20-1).

8. Verfahren nach einem der Ansprüche 1 bis 7, wobei jede der einen oder der mehreren Ergebnismeldungen eines oder mehrere umfasst von:
dem Konfigurationsbeschreiber;
einer kompakten Darstellung des Konfigurationsbeschreibers; und
einer Kennung der ersten Link-State-Nachricht; und/oder
wobei jede der einen oder mehreren Ergebnismeldungen der einen oder der mehreren Link-State-Nachrichten innerhalb eines Multi-Topology Capability Type Length Value Elements der jeweiligen Link-State-Nachricht enthalten ist.

9. Verfahren, durch einen empfangenden Netzwerkknoten (20-1) in einem Kommunikationsnetzwerk (10) implementiert, das ein Link-State-Protokoll implementiert, zum Implementieren einer angefragten Netzwerkkonfiguration, die durch einen anfragenden Netzwerkknoten (20) bestimmt ist, das Verfahren umfassend:
Empfangen (160) eines Konfigurationsbeschreibers, der die angefragte Netzwerkkonfiguration beschreibt, innerhalb einer ersten Link-State-Nachricht, die durch den anfragenden Netzwerkknoten (20) erstellt wird und durch das Kommunikationsnetzwerk (10) geleitet wird;
Versuchen (162), eine Konfigurationshandlung basierend auf dem Konfigurationsbeschreiber auszuführen; und
Senden (164) einer Ergebnismeldung in einer zweiten Link-State-Nachricht, durch Leiten der zweiten Link-State-Nachricht an einen oder mehrere Peer-Netzwerkknoten des Kommunikationsnetzwerks (10) und den anfragenden Netzwerkknoten (20), wobei die Ergebnismeldung ein Ergebnis des Versuchs, die Konfigurationshandlung auszuführen, anzeigt.

10. Verfahren nach Anspruch 9, des Weiteren umfassend:
Empfangen (166) einer oder mehrerer Ergebnismeldungen, die durch den einen oder die mehreren Peer-Netzwerkknoten erstellt werden, wobei jede der einen oder der mehreren Ergebnismeldungen ein Ergebnis eines Versuchs durch den jeweiligen erstellenden Netzwerkknoten, eine Konfigurationshandlung als Reaktion auf den Konfigurationsbeschreiber auszuführen, anzeigt.

11. Verfahren nach Anspruch 10, des Weiteren umfassend:
Ermitteln (168), ob die angefragte Netzwerkkonfiguration, die durch den anfragenden Netzwerkknoten (20) bestimmt ist, basierend auf der einen oder den mehreren Ergebnismeldungen implementiert wurde; und
nach Ermitteln, dass die angefragte Netzwerkkonfiguration nicht implementiert wurde, optional Abbrechen (170) von Konfigurationsänderungen, die basierend auf dem Konfigurationsbeschreiber gemacht werden.

12. Verfahren nach Anspruch 9 oder 10, wobei die Ergebnismeldung anzeigt, dass der empfangende Netzwerkknoten (20-1) versagt hat, die Konfigurationshandlung auszuführen, um die angefragte Netzwerkkonfiguration zu implementieren.

13. Verfahren nach einem der Ansprüche 9 bis 11, wobei die Ergebnismeldung anzeigt, dass der empfangende Netzwerkknoten (20-1) die Konfigurationshandlung erfolgreich ausgeführt hat, um die angefragte Netzwerkkonfiguration zu implementieren.

14. Verfahren nach einem der Ansprüche 9 bis 13, wobei der Konfigurationsbeschreiber einen ausdrücklichen Pfad im Kommunikationsnetzwerk (10) identifiziert; und wobei optional der ausdrückliche Pfad einen oder mehrere strikte Hops umfasst, die einen exakten Pfad für den ausdrücklichen Pfad bestimmen; oder
wobei der ausdrückliche Pfad zumindest einen lockeren Hop umfasst und somit keinen exakten Pfad für den ausdrücklichen Pfad bestimmt.

15. Verfahren nach Anspruch 9, wobei der Konfigurationsbeschreiber einen ausdrücklichen Pfad im Kommunikationsnetzwerk (10) identifiziert, der zumindest einen lockeren Hop umfasst und somit keinen exakten Pfad für den ausdrücklichen Pfad bestimmt, und wobei das Verfahren des Weiteren umfasst:
Ermitteln, durch den empfangenden Netzwerkknoten (20-1), des exakten Pfads, basierend auf der einen oder den mehreren Ergebnismeldungen von dem einen oder den mehreren Peer-Netzwerkknoten (20-1).

16. Verfahren nach einem der Ansprüche 9 bis 15, wobei die Ergebnismeldung eines oder mehrere umfasst von:
dem Konfigurationsbeschreiber;
einer kompakten Darstellung des Konfigurationsbeschreibers; und
einer Kennung der ersten Link-State-Nachricht; und/oder
wobei die Ergebnismeldung innerhalb eines Multi-Topology Capability Type Length Value Elements der zweiten Link-State-Nachricht enthalten ist.

17. Netzwerkknoten (20) in einem Kommunikationsnetzwerk (10), umfassend:
eine Schnittstellenschaltung (25), die konfiguriert ist, mit einem oder mehreren Netzwerkknoten des Kommunikationsnetzwerks (10) zu kommunizieren, und
eine Steuerungsschaltung (30), die mit der Schnittstellenschaltung gekoppelt und konfiguriert ist, alle Schritte des Verfahren nach einem der Ansprüche 1 bis 16 durchzuführen.

## Revendications

1. Procédé dans un noeud de réseau demandeur (20) dans un réseau de communication (10) mettant en oeuvre un protocole d'état de liaison pour déterminer si une configuration de réseau demandée a été mise en oeuvre, le procédé comprenant :
l'envoi (150), par le noeud de réseau demandeur (20), d'un descripteur de configuration à l'intérieur d'un premier message d'état de liaison en inondant le premier message d'état de liaison vers un ou plusieurs noeuds de réseau d'entités homologues (20-1) dans le réseau de communication (10), dans lequel le descripteur de configuration décrit la configuration de réseau demandée ;
la réception (154), par le noeud de réseau demandeur (20), d'un ou plusieurs rapports de résultat à l'intérieur d'un ou plusieurs messages d'état de liaison provenant de l'un ou plusieurs noeuds de réseau d'entités homologues (20-1) et inondés à travers le réseau de communication (10), dans lequel chacun de l'un ou plusieurs rapports de résultat indique un résultat d'une tentative, par le noeud de réseau d'entités homologues d'origine respectif, d'exécution d'une action de configuration prise en réponse au descripteur de configuration ; et
la détermination (156), par le noeud de réseau demandeur (20), si la configuration de réseau demandée a été mise en oeuvre sur la base de l'un ou plusieurs rapports de résultat.

2. Procédé selon la revendication 1, comprenant en outre :
en réponse à la détermination que la configuration de réseau demandée n'a pas été mise en oeuvre, l'annulation (158) de changements de configuration apportés sur la base du descripteur de configuration ; et dans lequel ladite annulation comprend facultativement l'envoi d'un message de rapport de résultat à l'un ou plusieurs noeuds de réseau d'entités homologues (20-1), dans lequel le message de rapport de résultat comprend un code de résultat indiquant une défaillance.

3. Procédé selon l'une quelconque des revendications 1 à 2, comprenant en outre :
après l'envoi du descripteur de configuration à l'intérieur du premier message d'état de liaison, l'envoi (152) d'un rapport de résultat à l'intérieur d'un deuxième message d'état de liaison en inondant le deuxième message d'état de liaison vers l'un ou plusieurs noeuds de réseau d'entités homologues (20-1) par l'intermédiaire du réseau de communication (10).

4. Procédé selon l'une quelconque des revendications 1 à 3, dans lequel le noeud de réseau demandeur (20) comprend une entité de calcul d'itinéraire ; et/ou
dans lequel le réseau de communication (10) comprend un réseau de commutation (15) ; et
le noeud de réseau demandeur (20) comprend un organe de commande de réseau du réseau de commutation (15).

5. Procédé selon l'une quelconque des revendications 1 à 4, dans lequel :
le réseau de communication (10) comprend un réseau de commutation (15) ; et
le noeud de réseau demandeur (20) et l'un ou plusieurs noeuds de réseau d'entités homologues (20-1) sont des noeuds de commutation du réseau de commutation (15).

6. Procédé selon l'une quelconque des revendications 1 à 5, dans lequel le descripteur de configuration identifie un itinéraire explicite comprenant un ou plusieurs sauts stricts spécifiant un itinéraire exact pour l'itinéraire explicite ; et/ou
dans lequel le descripteur de configuration identifie un itinéraire explicite qui comprend au moins un saut libre et ne spécifie donc pas d'itinéraire exact pour l'itinéraire explicite.

7. Procédé selon la revendication 1, dans lequel le descripteur de configuration identifie un itinéraire explicite qui comprend au moins un saut libre et ne spécifie donc pas d'itinéraire exact pour l'itinéraire explicite, dans lequel le procédé comprend en outre :
la détermination, par le noeud de réseau demandeur (20), de l'itinéraire exact sur la base de l'un ou plusieurs rapports de résultat à partir de l'un ou plusieurs noeuds de réseau d'entités homologues (20-1).

8. Procédé selon l'une quelconque des revendications 1 à 7, dans lequel chacun de l'un ou plusieurs rapports de résultat comprend un ou plusieurs de :
le descripteur de configuration ;
une représentation compacte du descripteur de configuration ; et
un identifiant du premier message d'état de liaison ;
et/ou
dans lequel chacun de l'un ou plusieurs rapports de résultat de l'un ou plusieurs messages d'état de liaison est inclus à l'intérieur d'un élément de valeur de longueur type de capacité de topologies multiples du message d'état de liaison respectif.

9. Procédé mis à un oeuvre par un noeud de réseau récepteur (20-1) dans un réseau de communication (10) mettant en oeuvre un protocole d'état de liaison pour la mise en oeuvre d'une configuration de réseau demandée spécifiée par un noeud de réseau demandeur (20), le procédé comprenant :
la réception (160) d'un descripteur de configuration qui décrit la configuration de réseau demandée à l'intérieur d'un premier message d'état de liaison provenant du noeud de réseau demandeur (20) et inondé à travers le réseau de communication (10) ;
la tentative (162) d'exécution d'une action de configuration sur la base du descripteur de configuration ; et
l'envoi (164) d'un rapport de résultat dans un deuxième message d'état de liaison en inondant le deuxième message d'état de liaison vers un ou plusieurs noeuds de réseau d'entités homologues du réseau de communication (10) et le noeud de réseau demandeur (20), dans lequel le rapport de résultat indique un résultat de la tentative d'exécution de l'action de configuration.

10. Procédé selon la revendication 9, comprenant en outre la réception (166) d'un ou plusieurs rapports de résultat provenant de l'un ou plusieurs noeuds de réseau d'entités homologues, dans lequel chacun de l'un ou plusieurs rapports de résultat indique un résultat d'une tentative, par le noeud de réseau d'entités homologues d'origine respectif, d'exécution d'une action de configuration en réponse au descripteur de configuration.

11. Procédé selon la revendication 10, comprenant en outre
la détermination (168) si la configuration de réseau demandée spécifiée par le noeud de réseau demandeur (20) a été mise en oeuvre sur la base de l'un ou plusieurs rapports de résultat ; et
après la détermination que la configuration de réseau demandée n'a pas été mise en oeuvre, l'annulation (170) facultative de changements de configuration apportés sur la base du descripteur de configuration.

12. Procédé selon la revendication 9 ou 10, dans lequel le rapport de résultat indique que le noeud de réseau récepteur (20-1) a échoué à effectuer l'action de configuration pour mettre en oeuvre la configuration de réseau demandée.

13. Procédé selon l'une quelconque des revendications 9 à 11, dans lequel le rapport de résultat indique que le noeud de réseau de réception (20-1) a réussi à effectuer l'action de configuration pour mettre en oeuvre la configuration de réseau demandée.

14. Procédé selon l'une quelconque des revendications 9 à 13, dans lequel le descripteur de configuration identifie un itinéraire explicite dans le réseau de communication (10) ; et, facultativement, dans lequel l'itinéraire explicite comprend un ou plusieurs sauts stricts spécifiant un itinéraire exact pour l'itinéraire explicite ; et/ou
dans lequel l'itinéraire explicite comprend au moins un saut libre et ne spécifie donc pas d'itinéraire exact pour l'itinéraire explicite.

15. Procédé selon la revendication 9, dans lequel le descripteur de configuration identifie un itinéraire explicite dans le réseau de communication (10) qui comprend au moins un saut libre et ne spécifie donc pas d'itinéraire exact pour l'itinéraire explicite, et dans lequel le procédé comprend en outre :
la détermination, par le noeud de réseau récepteur (20-1), de l'itinéraire exact sur la base de l'un ou plusieurs rapports de résultat à partir de l'un ou plusieurs noeuds de réseau d'entités homologues (20-1).

16. Procédé selon l'une quelconque des revendications 9 à 15, dans le rapport de résultat comprend un ou plusieurs de :
le descripteur de configuration ;
une représentation compacte du descripteur de configuration ; et
un identifiant du premier message d'état de liaison ;
et/ou
dans lequel le rapport de résultat est inclus à l'intérieur d'un élément de valeur de longueur type de capacité de topologies multiples du deuxième message d'état de liaison.

17. Noeud de réseau (20) dans un réseau de communication (10), comprenant :
un circuit d'interface (25) configuré pour communiquer avec un ou plusieurs noeuds de réseau du réseau de communication (10), et
un circuit de commande (30) couplé au circuit d'interface et configuré pour effectuer toutes les étapes du procédé selon l'une quelconque des revendications 1 à 16.
